# EUROPEAN PATENT SPECIFICATION

(11) **EP 0 856 031 B1**
(45) Date of publication and mention of the grant of the patent: **26.03.2003**
(21) Application number: 96936467.8
(22) Date of filing: 16.10.1996
(51) Int. Cl.: C08K 13/02, C08L 23/28

(54) **CURING SYSTEMS FOR HALOGENATED ELASTOMERS HAVING IMPROVED HIGH TEMPERATURE COMPRESSION SET**
VERNETZERSYSTEME FÜR HALOGENIERTE ELASTOMERE MIT VERBESSERTEM DRUCKVERFORMUNGSREST BEI HOHEN TEMPERATURE
SYSTEME DE DURCISSEMENT POUR ELASTOMERES HALOGENES PAR FAIBLE REMANENCE PAR COMPRESSION SOUS HAUTE TEMPERATURE

(30) Priority: 17.10.1995 US 5564 P
(43) Date of publication of application: 05.08.1998
(73) Proprietor: ExxonMobil Chemical Patents Inc., Baytown, TX 77520-5200 (US)
(72) Inventor: McELRATH, Kenneth, O., Houston, TX 77059 (US)
(74) Representative: Weber, Thomas, Dr.Dipl.-Chem.
(86) International application number: US9616438
(87) International publication number: WO97014748

(56) References cited:
- EP-A- 0 643 101
- WO-A-93/05110
- JP-A- 6 172 598

## Description

### FIELD OF THE INVENTION:

The present invention relates to the use of a specific curing system for halogenated elastomers, particularly elastomeric copolymers containing isobutylene and parahaloalkyl-substituted styrene, yielding cured products having improved high temperature compression set.

### BACKGROUND OF THE INVENTION

Halogenated copolymers of isobutylene and up to about 10 mole % of isoprene (butyl rubber) are well known polymer materials whose vulcanizates offer some outstanding properties not possessed by many other diolefin based elastomers. Articles prepared from many cured halogenated elastomers offer improved resistance to oils and greases as well as resistance to oxygen and ozone degradation. Butyl rubber vulcanizates exhibit good abrasion resistance, excellent impermeability to air, water vapor and many organic solvents, as well as resistance to aging and sunlight. These properties render these materials ideal hoses, organic fluid hoses, components in tire construction, gaskets, automotive body and engine mounts, and various molded articles.

More recently, a new class of halogenated elastomeric interpolymers have been discovered which offer many of the same properties as halogenated butyl rubber, but are even more ozone and solvent resistant and are more readily curable. These materials are the halogenation product of random copolymers of a C₄ to C₇ isoolefin, such as isobutylene, and a para-alkylstyrene comonomer wherein at least some of the alkyl substituent groups present in the styrene monomer units contain halogen. Preferred materials may be characterized as isobutylene interpolymers containing the following monomer units randomly spaced along the polymer chain: 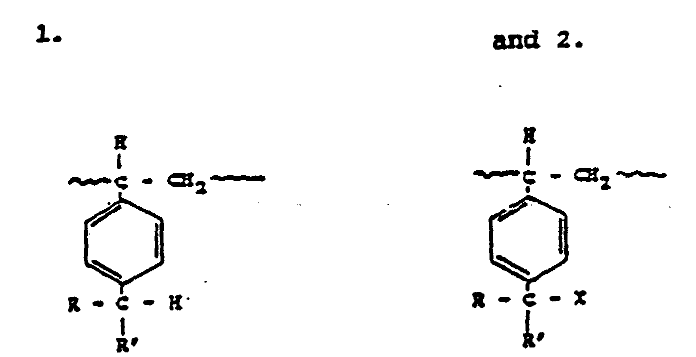 wherein R and R' are independently hydrogen, lower alkyl, preferably C₁ to C₄ alkyl and X is bromine or chlorine, and wherein the interpolymer is otherwise substantially free of ring halogen or halogen in the polymer backbone chain. Preferably R and R' are each hydrogen. Up to about 60 mole % of the para-alkylstyrene present in the interpolymer structure may be the halogenated structure (2) above.

These copolymers may be prepared by slurry polymerization of the monomer mixture using a Lewis Acid catalyst, followed by halogenation, e.g. bromination or chlorination, in solution in the presence of halogen and a radical initiator such as heat and/or light and/or a chemical initiator.

Preferred copolymers are brominated copolymers generally containing from about 0.1 to about 2 mole % of bromomethyl groups, most of which is monobromomethyl, with less than 0.05 mole % dibromomethyl substituents present in the copolymer. These copolymers and their method of preparation are more particularly disclosed in U.S. -A- 5,162,445.

The aromatic halomethyl groups present in such copolymers permit facile cross linking to be accomplished in a variety of ways, including by means of zinc oxide or promoted zinc oxide curing systems normally used to cure halogenated butyl rubber. Illustrative of known accelerators which are known for use in conjunction with zinc oxide for curing halogenated butyl rubber are brominated alkyl phenol resin; N,N'-diethylthiourea; di-otho-(tolyl)guanidine salt of dicatechol borate; dipentamethylene thiuram tetrasulfide; ethylene trithiocarbamate; 2-mercapto-benzothiazole; alkyl or aryl benzothiazole disulfides, tetramethylthiuram disulfide, zinc diethyldithiocarbamate, zinc dibutyldithiorcarbamate, and zinc dimethyldithiocarbamate. A known cure system comprises zinc oxide and zinc diethyldithiocarbamate, since this sytems results in a vulcanized rubber with generally low compression set.

It is also disclosed in U.S. -A- 4,755,548 that the sodium, zinc, nickel, and piperidium salts of dialkyldithiocarbamic acid may be used as vulcanization accelerators in the zinc oxide cure of chlorobutyl rubber.

Other patents and publications which disclose zinc oxide, stearic acid and various accelerator curing systems for halogenated butyl rubber or halogenated copolymers of isobutylene and a para-alkylstyrene include WO-A-92/16587 and US-A-4,464,500, 5,246,778 and 5,332,787.

WO-A-93/05110 discloses a curable composition comprising a halogenated elastomer, a metal salt of a dialkyldithiocarbamic acid (such as zinc diethyldithiocarbamate), triethylene glycol and "hydro zincite" which is a basic zinc carbonate hydroxide selected from 5Zn0•2CO₃•4H₂0; ZnCO₃•2Zn(OH)₂•2H₂O and 2ZnCO₃•Zn(OH)₂.

Low compression set is a very important property for curable elastomeric compositions which are intended for uses such as gasket material, automotive hoses, and automotive body and engine mounts.

Compression set refers to the ability of a cured rubber material to return to its original size or shape dimension after a period of having been compressed and subjected to elevated temperatures, e.g., 70-275°C. For example, if one considers a 1 inch high disc of cured rubber, such as might be used as an engine mount, bolted between an engine and body frame and compressed between these mounts such that the compressed height was now 1.90 cm (0.75 inch), the degree to which this disc retains the compressed 1.90cm (0.75 inch) dimension after the release of compression pressure is referred to as compression set. A high compression set, e.g., 100%, would mean that the disc remained at the compressed 1.90 cm (0.75 inch) dimension after release of compressive pressure; a low compression set, e.g., 0%, would mean that the disc returned to its original 1 inch height dimension after release of compressive pressure.

Accordingly, low compression set is a very desirable property for cured rubber compositions, particularly for gasket and engine mount applications. Certain applications such as pressurized rubber hoses require a combination of high modules to resist expansion under pressure and good compression set resistance to prevent leaks around various clamps and fittings. In addition, performance at elevated temperatures for extended periods of time are important in applications such as steam hoses and automotive air conditioning hoses and engine mounts.

While many cured rubber materials have reasonably low compression set when used in applications where temperatures of up to about 125°C are routinely encountered, e.g., cured holobutyl rubber or cured halogenated isobutylene/paramethylstyrene (PMS) rubber, the elastomers of choice for use in applications involving use at temperatures above 125°C generally have been ethylene/propylene/diene(EPDM) elastomers, silicone elastomers and fluoroelastomers.

The present invention now provides a specific curing system for halobutyl rubber and halogenated isobutylene/PMS copolymer rubber which gives rise to vulcanizates having outstanding low compression set values even where used in applications where temperatures above 125°C, e.g., 150 to 200°C, are routinely or intermittently encountered.

### Summary of the Invention

The present invention provides a curable composition comprising a mixture of a halogenated elastomer selected from the group consisting of chlorinated or brominated butyl rubber and chlorinated or brominated interpolymers of a C₄ to C₇ isoolefin and a para-alkylstyrene comonomer, or mixtures thereof, and a curing system for said halogenated elastomer present in said composition in an amount sufficient to cure said composition, said curing system comprising:
a) 0 to 5 parts by weight phr of zinc oxide;
b) At least . 0.25 parts by weight phr of at least one metal or ammonium salt of a dialkyl dithiocarbamic acid wherein the alkyl groups contain 1 to 12 carbon atoms or a diaryl dithiocarbamic acid wherein the aryl groups contains 6 to 10 carbon atoms;
c) At least 0.25 parts by weight phr of a polyalkylene glycol; and
d) At least 0.1 part by weight phr of at least one finely divided hydrotalcite which is a basic metal carbonate hydroxide material wherein the metal comprises more than one of magnesium, zinc or aluminium.

The cured compositions of the invention are high modulus materials having good high temperature compression set and are useful in applications where high temperature compression set properties are important. Preferred embodiments of the invention become evident from the dependent claims.
The invention further relates to a method for preparing a vulcanized composition comprising heating the composition as described above at a temperature and a time sufficient to cure said composition.

The present invention further pertains to a vulcanized shaped article obtainable by said process wherein said article has a compression set, as determined using ASTM laboratory test practice (ASTM D395-89) after 96 hours at 175 °C of less than 50 %, preferably less than 40 %.

### Detailed Description of the Invention

The halogenated elastomer present in the curable compositions of this invention may include chlorinated or brominated butyl rubber, chlorinated or brominated interpolymers of a C₄ to C₇ isoolefin and a para-alkyl styrene, mixtures thereof or mixtures of one or both of these elastomers with other elastomers such as polybutadiene, copolymers of butadiene with styrene or acrylonitrile, natural rubber, polychloroprene or elastomeric copolymers of ethylene, propylene and up to 10 mole % of a non-conjugated diene (known as EPDM rubber).

The preferred halobutyl rubbers are based or chlorinated or brominated copolymers ofisobutylene with up to about 20 mole %, preferably up to 10 mole %, more preferably up to 4 mole % of isoprene. These elastomers generally have a number average molecular weight within the range of 50,000 up to 500,000 and may be prepared by polymerization and halogenation methods well known in the art such as disclosed in U.S. -A- 2,940,960 and 3,099,644.

Halogenated interpolymers based on a C₄ to C₇ isoolefin, such as isobutylene, and a para-atkylstyrene, such as para-methylstyrene, are also now known in the art as evidenced by the aforementioned US -A- 5,162,445. These elastomers are inclusive of those described in the Backgound section of this disclosure.

Preferred materials are the halogenation product of a random copolymer of a C₄ to C₇ isoolefin, such as isobutylene, and a para-alkylstyrene comonomer wherein at least some of the alkyl substituent groups present in the styrene monomer units contain halogen. Preferred materials may be characterized as isobutylene terpolymers containing mixed monomer materials having the structure set forth as 1 and 2 above wherein at least about 5 mole % of the comonomer units present in the polymer chain are of the structure of formula 2, R and R' are independently hydrogen or C₁ to C₄ alkyl, and X is bromine or chlorine, and wherein the terpolymer is otherwise substantially free of any halogen in the polymer backbone chain.

The most preferred elastomers used in the compositions of the present invention are random elastomeric brominated terpolymers comprising isobutylene and para-methylstyrene (PMS) containing from 0.5 to 20 mole % PMS, more preferably from 2 to 15 mole % PMS, wherein up to 60 mole % of the PMS monomer units contain a mono-bromomethyl group. Preferred elastomeric terpolymers generally exhibit a number average molecular weight in the range of from 50,000 to 250,000, more preferably from 80,000 to 180,000. From 5 up to 60 mole % of the total PMS monomer content of the terpolymer contains a mono-bromomethyl group with essentially no bromination occurring in the polymer backbone or in the aromatic ring. The bromine content of these terpolymers generally ranges from 0.1 to 5 mole %.

Suitable dithiocarbamate salts which may be used as the primary vulcanization accelerator include metal salts of dialkyl substituted dithiocarbamic acid wherein the alkyl groups contain 1 to 12 carbon atoms, more preferably 1 to 4 carbon atoms, metal salts of diaryl substituted dithiocarbamic acid wherein the aryl groups contain 6 to 10 carbon atoms and mixtures thereof. Salt forming cations include alkali or alkaline earth metals and other metals such as zinc, bismuth, nickel, copper, selenium, lead, tellurium and cadmium, as well as ammonium salts such as alkyl ammonium or piperidium salts. Examples of such accelerators include zinc dimethyldithiocarbamate, zinc diethyldithiocarbamate, zinc dibutyldithiocarbamate, nickel dibutyldithiocarbamate, calcium diethyldithiocarbamate, zinc diphenyldithiocarbamate, diethylammonium diethyldithiocarbamate, sodium dimethyldithiocarbamate, sodium diethyldithiocarbamate, sodium dibutyldithiocarbamate, sodium diphenyldithiocarbamate, calcium diethyldithiocarbamate, magnesium diethyldithiocarbamate and like metal salts and their hydrates, as well as mixtures thereof. The preferred material is zinc diethyldithiocarbamate.

The quantity of the dithiocarbamate used to accelerate the cure of the halogenated elastomer composition will vary as a function of the halogen content of the elastomer. Generally, it is employed in the range of from .25 to

2.5 parts by weight, more preferably in the range of 0.25 to. 2.0 parts by weight per 100 parts by weight of halogenated elastomer.

Suitable polyalkylene glycols which may be used as a no-curative include C₂ to C₄ alkylene glycols having a molecular weight in the range of from 60 up to 6000, more preferably from : 100 to 4000. Suitable polyalkylene glycols include polyethylene glycol, polypropylene glycol, polybutylene glycol as well as relatively non-volatile lower molecular weight polyalkylene glycols, such as trimethylene glycol, diethylene glycol, triethylene glycol, tetraethylene glycol, dipropylene glycol and tripopylene glycol. Triethylene glycol is a preferred polyalkylene glycol.

The amount of glycol added to the composition may be in the range of from 0.25 up to 5.0 parts by weight phr, more preferably from 0.5 to 4 parts by weight per 100 parts by weight rubber (phr).

The hydrotalcite component of the curing system may be described as a basic metal carbonate hydroxide material wherein the metal comprises more than one of magnesium, zinc, or aluminum carbonates. Preferred metal carbonate hydroxides are magnesium/aluminum compounds having the structure Mg₄Al₂(OH)₁₂CO₃XH₂0 (X is 0-3) and zinc carbonate hydroxides having the structure; ZnMg₃Al₂(OH)₁₂CO₃ XH₂0 (X is 0-3). as well as dehydrated versions thereof. These materials are finely divided powders having an average particle size of less than 1 micrometer and are present in the composition at a level of from 0.1 to 5 parts by weight, more particularly from 0.25 to 4 parts by weight phr.

The curing system is preferably used in conjunction with zinc oxide as the primary curative agent. Zinc oxide is normally used in such systems at a level of from 0.2 to 7 parts by weight per 100 parts by weight of halogenated elastomer. The present invention provides for particularly good low cure reversion and low precure scorch where zinc oxide is present at relatively low levels in the range of from :0.3 to 1.5 parts by weight per 100 parts by weight of halogenated elastomer. Zinc oxide may be excluded from the curing system where other sources of zinc are present, e.g., zinc stearate, a zinc dithiocarbamate or a zinc-containing hydrotalcite.

The compositions of this invention may also contain a blend of the halogenated elastomers with other elastomers such as natural rubber, polybutadiene, copolymers of butadiene with styrene or acrylonitrile, EPDM elastomers and like materials. The most preferred blends are those containing the halogenated elastomer in major proportion, e.g., greater than 50% by weight of the elastomer content of the composition is the halogenated elastomer. When making such blends, sulfur or other well known sulfur-containing curatives may be included in the composition, provided they do not detract from the good low compression set properties of the other curatives present in the composition.

Examples of such compounds are sulfur, benzothiazyl disulfide, N-oxydiethylene benzothiazole-2-sulfenamide, 2-mercaptobenzothiazole, tetramethylthiuram disulfide, m-phenylene bis maleimide, 2-mercapto-4, 5-methylbenzimidazole and like materials.

The vulcanizable composition may also contain other conventional additives know in the art, including fillers such as carbon black or silica, stabilizers, antioxidants, plasticizers, processing oils, pigments, flame retardants, blowing agents and like additives as are known in the art.

Preferred additives for the applications of this invention include reinforcing grade carbon black, present at a level of from 10 to 70 parts by weight phr, aromatic or aliphatic processing oils present at a level of from 1 to 15 parts phr, fatty acids or fatty acid salts, e.g., stearic acid or zinc stearate, present at a level of from 0.25 to 5 parts by weight phr and low molecular weight extrusion/molding aids such as paraffin waxes or low molecular weight polyethylene, present at a level of from 1 to 10 parts by weight phr.

The vulcanizable composition may be prepared and blended using any suitable mixing device such as a two-roll mill, an internal mixer (Brabender Plasticorder), a Banbury Mixer, a kneader or a similar mixing device. Blending temperatures and times may range 15° to 180°C and from 4 to 10 minutes respectively. After forming a homogeneous masterbatch mixture of the halogenated elastomer and the optional fillers, processing aids and the like, the mixture is then prepared for vulcanization by the further incorporation of the curing system of this invention in the mixing device or on a separate mixing device such as a two roll mill at temperatures generally below 100°C, after which the mixture is sheeted out and molded into shaped articles, as is well known in the art. Alternatively, the composition may be blended in a mixer/extruder, extruded into shapes which shapes may then be vulcanized into cured shaped articles. The shaped articles may be cured by heating to a temperature of 140°C to 190°C for a period of time sufficient to vulcanize the composition, e.g., from 5 to 60 minutes.

The following examples are illustrative of the invention. In the Examples, the halogenated elastomer employed (designated BIPMS) was a brominated terpolymer of isobutylene and para-methyl styrene (PMS) having the following characteristics:

| | |
|---|---|
| PMS CONTENT | 2.35 mole % (7.5 wt %) |
| BROMINE CONTENT | 1.2 mole % (2.0 wt %) |
| MOONEY VISCOSITY | ML [(1 + 8) 125°C] = 45±5 |
| PHENOLIC ANTIOXIDANT | 0.03 wt % |
| CALCIUM STEARATE | 1.0 wt% |

### EXAMPLES 1-3

The brominated polymer described above was compounded, vulcanized, and evaluated for curing activity and vulcanizate properties. A series of three formulations as described in Table 1 were prepared by first compounding 100 parts by weight of the brominated polymer (BIPMS), 55 parts by weight of a reinforcing carbon black (N-330), 5 parts by weight of an aliphatic process oil and 4 parts by weight of a polyethylene process aid on a laboratory Banbury mixer at a temperature between 65.6°C (150°F) and 160°C (320°F) for about 10 minutes. Portions of this masterbatch were then formulated with a curative mixture of stearic acid, zinc oxide and various curing system additives as shown in Table 1 by adding the curative mixture to the rubber stock and milling the mixture on a two roll mill at a temperature of less than about 100°C for about 5 minutes.

Other materials identified in Table 1 are as follows:
SULFADS - dipentamethylene thiuram tetrasulfide
ETHYL ZIMATE - zinc diethyldithiocarbamate
DHT-4A2 - a hydrotalcite from Kyowa Chemical Industries of Japan having the structure Mg₄Al₂(OH)₁₂CO₃.

The curable mixtures were evaluated for vulcanization activity using a Monsanto Oscillating Disc Rheometer and then physical properties of the vulcanizates were evaluated by vulcanizing test pads under the various cure conditions set forth in Table 1 using standard ASTM laboratory test practice as follows:

### ASTM Test

| | |
|---|---|
| D-3182-89 | Mixing and curing procedure |
| D-412-92 | Tensile |
| D-573-88 | Oven aging |
| D3183-84/92 | Curing non-tensile pad parts |
| D-395-89 | Compression set |
| D-2240-91 | Hardness |
| D-2084-93 | Oscillating Disc Rheometer |
| D-1349-87/92 | Std. test temperatures |

**TABLE 1**

| **EXAMPLE#** | **1**^{***)**} | **2** | **3** |
|---|---|---|---|
| **Master Batch** | | | |
| BI-PMS | 100 | 100 | 100 |
| BLACK N-330 | 55 | 55 | 55 |
| SUNPAR 2280 | 5 | 5 | 5 |
| POLYETHYLENE AC617 | 4 | 4 | 4 |
| **Accelerators** | | | |
| STEARIC ACID | 2 | 2 | 2 |
| ZINC OXIDE | 1 | 1 | 1 |
| SULFADS | | | 1 |
| ETHYL ZIMATE | I | 1 | |
| TRIETHYLENE GLYCOL | 2 | 2 | 2 |
| DHT-4A2 | | 2 | 2 |

| **Mixing Conditions** | | | |
|---|---|---|---|
| Dump Time, min. | 3.9 | 3.9 | 4 |
| Batch Dump Temp., °C (°F) | 154.4 (310) | 154.4 (310) | 160 (320) |
| Batch Weight, grams | 1348 | 1348 | 1338 |
| **Curing Conditions** | | | |
| Time, min. | 30 | 30 | 30 |
| Temperature. °C | 171 | 171 | 171 |

| **PHYSICAL PROPERTIES** | | | |
|---|---|---|---|
| **Mooney Scorch** | | | |
| T3 @ 132c, min. | 6.78 | 8.61 | 7.95 |
| **Mooney Viscosity** | | | |
| 1+4 @ 100C | 74.3 | 75.9 | 76.1 |
| 1+8 @ 100C | 72.2 | 74 | 74.5 |

| **Rheometer Cure, ODR @** 171°C | | | |
|---|---|---|---|
| MH. dNm | 80.19 | 73.47 | 78.33 |
| ML. dNm | 16.6 | 16.17 | 13.64 |
| T90, min | 14.99 | 21.48 | 22.34 |
| ts2,min | 1.39 | 2.07 | 2.33 |
| Rate | 7.8 | 4.5 | 6.1 |

| **Hardness, Shore A** | | | |
|---|---|---|---|
| Room Temperature | 59.5 | 59.5 | 59.9 |
| **After Aging** | | | |
| 22 hr @ 150°C | 59.5 | 59.9 | 61.1 |
| 70 hr @ 150°C | 64.1 | 64.3 | 63.3 |
| 96 hr @ 175°C | 67.9 | 68.9 | 69.7 |
| 170 hr @ 150°C | 74.3 | 73.1 | 74.7 |

| **Stress Strain** | | | |
|---|---|---|---|
| 100% Modulus, MPa | 3.8 | 4.3 | 3.8 |
| 300% Modulus. MPa | 0 | 0 | 0 |
| Elongation @ Break, % | 211 | 209 | 252 |
| Tensile @ Break, MPa | 11.9 | 12.9 | 14.1 |

| **Stress Strain, Aged 22 hr @ 150°C** | | | |
|---|---|---|---|
| 100% Modulus. MPa | 4 | 4.1 | 3.8 |
| 300% Modulus, MPpa | 0 | 0 | 0 |
| Elongation @ Break, % | 216 | 216 | 234 |
| Tensile @ Break, MPa | 13.4 | 13.4 | 13.9 |

| **Stress Strain, Aged 70 hr @150°C** | | | |
|---|---|---|---|
| 100% Modulus. MPa | 4.4 | 4.5 | 4.5 |
| 300% Modulus, MPa | 0 | 0 | 0 |
| Elongation @ Break, % | 193 | 198 | 226 |
| Tensile @ Break, MPa | 12.2 | 12.9 | 13.3 |

| **Stress Strain, Aged 170 hr @ 150°C** | | | |
|---|---|---|---|
| 100% Modulus, MPa | 6.3 | 6 | 5.5 |
| 300% Modulus, MPa | 0 | 0 | 0 |
| Elongation @ Break. % | 152 | 161 | 184 |
| Tensile @ Break. MPa | 12.8 | 13.1 | 13.8 |

| **Stress Strain, Aged 96 hr @ 175°C** | | | |
|---|---|---|---|
| 100% Modulus. MPa | 7.1 | 6 | 5.9 |
| 300% Modulus. MPa | 0 | 0 | 0 |
| Elongation @ Breaks % | 122 | 162 | 154 |
| Tensile @ Break, MPa | 10.8 | 12.5 | 12.3 |

| **% Compression Set** | | | |
|---|---|---|---|
| 22hr @ 150°C | 11.9 | 15.8 | 31.2 |
| 70hr @ 150°C | 24.4 | 22.1 | 42.4 |
| 170hr @ 150°C | 36.1 | 31.9 | 47.9 |
| 96hr @ 175°C | 51.3 | 37.2 | 56.7 |
| 22hr@200°C | N.T. | 29.7 | N.T. |
| 70hr @ 200° C | N.T. | 48.6 | N.T. |

| | | | |
|---|---|---|---|
| *) not according to the invention *N.T. - not tested | | | |

The physical property data shown in Table 1 demonstrates that the specific curing system of the present invention (Example 2) gives rise to cured elastomers having not only high modulus values, but, also much improved compression set when compared with analogous curing systems outside the scope of the invention (Examples 1 and 3). For example, Example 1 differs from Example 2 only in the exclusion of the DHT-4A2 component in Example 1, and demonstrates a significantly higher compression set after 96 hours at 175°C than does Example 2. Similarly, Example 3 differs from Example 2 only in the replacement of Ethyl Zimate with Sulfads, and the compression set is significantly lower for Example 2 at all tested conditions.

### Example 4

The brominated copolymer described above was compounded as described in Examples 1-3 using a different masterbatch formulation as shown in Table 2. Flexon™ 815 is an aliphatic processing oil from Exxon Chemical Co. and PEG 3350 is a polyethylene glycol having a molecular weight of about 3350.

**TABLE 2**

| | |
|---|---|
| BI-PMS | 100 |
| FEF N-550 Carbon Black | 60 |
| Flexon™ 815 Process oil | 10 |
| | |
| Zinc Oxide | 1 |
| Ethyl Zimate | 1 |
| DHT-4A2 | 2 |
| PEG 3350 | 2 |
| **MDR 1° Arc, 60 min. @ 165°C** | |
| ML J (lb. in.) | 0.373 (3.3) |
| MH J (lb. in.) | 2.24 (19.8) |
| Ts2, min. | 3.3 |
| T90, min | 34.1 |
| **MDR 1° Arc, 60 min. @ 175°C** | |
| ML lb. in. | 3.2 |
| MH lb. in. | 19.8 |
| Ts2, min | 2.2 |
| T90, min | 23.3 |
| **Physical Properties, Cure** @ **165°C** | |
| Teasile @ Break, MPa | 12.8 |
| 100% Modulus, MPa | 3.9 |
| Elongation @ Break | 239 |
| Cure Time, min | 40 |
| Shore A Hardness | 65 |
| **Compression Set, 70 Hours @ 200°C** | |
| No Post-Cure | 59.1 |
| Post-Cure, 2 h. @ 165°C | 44.3 |

Once again, the cured composition exhibits a low compression set value of 59.1 after 70 hours at 200°C and an even lower value of 44.3 where the sample was post cured for 2 hours in an oven at 165°C.

Thus, the invention provides for cured elastomer compositions having both high modulus properties and compression set values of less than 50% even at high temperatures in the order of 200°C, and compression set values of less than 40% after 96 hours at 175°C.

## Claims

1. A curable composition comprising a mixture of a halogenated elastomer selected from the group consisting of chlorinated or brominated butyl rubber and chlorinated or brominated interpolymers of a C₄ to C₇ isoolefin and a para-alkylstyrene comonomer, and mixtures thereof, and a curing system for said halogenated elastomer, said curing system comprising:
a) 0 to 5 parts by weight phr of zinc oxide;
b) at least 0.25 parts by weight phr of at least one metal or ammonium salt of a dialkyl dithiocarbamic acid wherein the alkyl groups contain I to 12 carbon atoms or a diaryl dithiocarbamic acid wherein the aryl groups contain 6 to 10 carbon atoms;
c) at least 0.25 parts by weight phr of a polyalkylene glycol; and
d) at least 0.1 parts by weight phr of at least one finely divided hydrotalcite which is a basic metal carbonate hydroxide material wherein the metal comprises more thanone of magnesium, zinc or aluminum.

2. The composition of claim 1 wherein zinc oxide is present at a level of at least 0.2 parts by weight phr.

3. The composition of claim 2 wherein said hydrotalcite is represented by the formula Mg₄Al₂(OH)₁₂CO₃•XH₂O, where X is 0 to 3.

4. The composition of claim 3 where X is 0.

5. The composition of claim 1 further containing at least 0.25 parts by weight phr of stearic acid or zinc stearate.

6. The composition of claim 2 further containing at least 0.25 parts by weight phr of stearic acid.

7. The composition of claim 3 wherein said salt of dithiocarbamic acid is zinc diethydithiocarbamate.

8. The composition of claim 7 wherein said glycol is triethylene glycol.

9. The composition of claim 1 wherein said halogenated elastomer comprises a brominated interpolymer of isobutylene and para-methylstyrene.

10. The composition of claim 9 further containing from. 10 to 70 parts by weight phr of a filler.

11. The composition of claim 10 wherein said filler is a reinforcing grade carbon black.

12. The composition of claim 9 further containing from 0.25 to 5 parts by weight phr of a low molecular weight polyethylene processing aid.

13. The composition of claim 9 comprising:
a) from 0.3 up to 1.5 parts by weight phr of zinc oxide
b) from 0.25 up to 2.0 parts by weight phr of the zinc salt of said dialkyldithiocarbamic acid;
c) from 0.25 up to 4.0 parts by weight phr of said polyalkylene glycol; and
d) from 0.1 up to 5 parts by weight phr of said hydrotalcite.

14. The composition of claim 13 further containing from 0.25 up to 5 parts by weight phr of stearic acid.

15. The composition of claim 13 wherein said hydrotalcite has the formula Mg₄Al₂(OH)₁₂CO₃.

16. The composition of claim 15 wherein said zinc salt is zinc diethyldithiocarbamate.

17. The composition of claim 16 wherein said polyalkylene glycol is triethylene glycol.

18. The composition of claim 16 wherein said polyalkylene glycol is polyethylene glycol.

19. A method for preparing a vulcanized composition comprising heating the composition of claim 1 at a temperature and for a period of time sufficient to cure said composition.

20. A method for preparing a vulcanized composition comprising heating the composition of claim 13 at a temperature and for a period of time sufficient to cure said composition.

21. A vulcanized shaped article obtainable by the process of claim 19 or 20, said article having a compression set, as determined using standard ASTM laboratory test practic (ASTM D395-89), after 96 hours at 175°C of less than 50%.

22. The article of claim 21 having a compression set, as determined using standard ASTM laboratory test practice, after 96 hours at 175°C of less than 40%.

## Patentansprüche

1. Härtbare Zusammensetzung, umfassend eine Mischung eines halogenierten Elastomers, das aus der Gruppe ausgewählt ist, bestehend aus chloriertem oder bromiertem Butylkautschuk und chlorierten oder bromierten Interpolymeren eines C₄-C₇-Isoolefins und eines p-Alkylstyrol-Comonomers und deren Mischungen, und ein Härtungssystem für das halogenierte Elastomer, wobei das Härtungssystem folgendes umfasst:
a) 0 bis 5 Gewichtsteile phr Zinkoxid;
b) wenigstens 0,25 Gewichtsteile phr wenigstens eines Metalloder Ammoniumsalzes einer Dialkyldithiocarbaminsäure, wobei die Alkylgruppen 1 bis 12 Kohlenstoffatome enthalten, oder einer Diaryldithiocarbaminsäure, wobei die Arylgruppen 6 bis 10 Kohlenstoffatome enthalten;
c) wenigstens 0,25 Gewichtsteile phr eines Polyalkylenglycols, und
d) wenigstens 0,1 Gewichtsteile phr wenigstens eines fein zerteilten Hydrotalcits, welcher ein basisches Metallcarbonathydroxid-Material ist, in welchem das Metall mehr als ein aus Magnesium, Zink oder Aluminium ausgewähltes Metall umfasst.

2. Zusammensetzung gemäß Anspruch 1, in welcher Zinkoxid mit einem Gehalt von wenigstens 0,2 Gewichtsteilen phr vorliegt.

3. Zusammensetzung gemäß Anspruch 2, in welcher der Hydrotalcit durch die Formel Mg₄Al₂(OH)₁₂CO₃·xH₂O, wobei x 0 bis 3 ist, dargestellt wird.

4. Zusammensetzung gemäß Anspruch 3, wobei x 0 ist.

5. Zusammensetzung gemäß Anspruch 1, die weiterhin wenigstens 0,25 Gewichtsteile phr Stearinsäure oder Zinkstearat enthält.

6. Zusammensetzung gemäß Anspruch 2, die weiterhin wenigstens 0,25 Gewichtsteile phr Stearinsäure enthält.

7. Zusammensetzung gemäß Anspruch 3, in welcher das Salz der Dithiocarbaminsäure Zinkdiethyldithiocarbamat ist.

8. Zusammensetzung gemäß Anspruch 7, in welcher das Glycol Triethylenglycol ist.

9. Zusammensetzung gemäß Anspruch 1, in welcher das halogenierte Elastomer ein bromiertes Interpolymer von Isobutylen und p-Methylstyrol umfasst.

10. Zusammensetzung gemäß Anspruch 9, die weiterhin 10 bis 70 Gewichtsteile phr eines Füllstoffs umfasst.

11. Zusammensetzung gemäß Anspruch 10, in welcher der Füllstoff ein Ruß mit Verstärkungswirkung ist.

12. Zusammensetzung gemäß Anspruch 9, die weiterhin 0,25 bis 5 Gewichtsteile phr eines niedermolekularen Polyethylen-Verarbeitungshilfsmittels enthält.

13. Zusammensetzung gemäß Anspruch 9, umfassend:
a) 0,3 bis 1,5 Gewichtsteile phr Zinkoxid,
b) 0,25 bis 2,0 Gewichtsteile phr des Zinksalzes der Dialkyldithiocarbaminsäure,
c) 0,25 bis 4,0 Gewichtsteile phr des Polyalkylenglycols und
d) 0,1 bis 5 Gewichtsteile phr des Hydrotalcits.

14. Zusammensetzung gemäß Anspruch 13, die weiterhin 0,25 bis 5 Gewichtsteile phr Stearinsäure enthält.

15. Zusammensetzung gemäß Anspruch 13, in welcher der Hydrotalcit die Formel Mg₄Al₂(OH)₁₂CO₃ hat.

16. Zusammensetzung gemäß Anspruch 13, in welcher das Zinksalz Zinkdiethyldithiocarbamat ist.

17. Zusammensetzung gemäß Anspruch 16, in welcher das Polyalkylenglycol Triethylenglycol ist.

18. Zusammensetzung gemäß Anspruch 16, in welcher das Polyalkylenglycol Polyethylenglycol ist.

19. Verfahren zur Herstellung einer vulkanisierten Zusammensetzung, umfassend das Erwärmen der Zusammensetzung gemäß Anspruch 1 bei einer Temperatur und während einer Zeitspanne, die zum Härten der Zusammensetzung ausreichend sind.

20. Verfahren zur Herstellung einer vulkanisierten Zusammensetzung, umfassend das Erwärmen der Zusammensetzung gemäß Anspruch 13 bei einer Temperatur und während einer Zeitspanne, die zum Härten der Zusammensetzung ausreichend sind.

21. Vulkanisierter geformter Gegenstand, der durch das Verfahren gemäß den Ansprüchen 19 oder 20 erhältlich ist, wobei der Gegenstand eine bleibende Verformung - die unter Verwendung der Standard ASTM Laboratoriumstestpraxis (ASTM D395-89) bestimmt wurde - nach 96 Stunden bei 175 °C von weniger als 50 % aufweist.

22. Gegenstand gemäß Anspruch 21, der eine bleibende Verformung - die unter Verwendung der Standard ASTM Laboratoriumstestpraxis bestimmt wurde - nach 96 Stunden bei 175 °C von weniger als 40 % aufweist.

## Revendications

1. Composition durcissable comprenant un mélange d'un élastomère halogéné choisi dans le groupe consistant en le caoutchouc butyle chloré ou bromé et des interpolymères chlorés ou bromés d'une iso-oléfine en C₄ à C₇ et d'un comonomère para-alkylstyrène, ainsi que leurs mélanges, et un système de durcissement pour ledit élastomère halogéné, ledit système de durcissement comprenant :
a) 0 à 5 parties en poids phr d'oxyde de zinc ;
b) au moins 0,25 partie en poids phr d'au moins un sel métallique ou d'ammonium d'un acide dialkyldithiocarbamique dans lequel les groupes alkyle contiennent 1 à 12 atomes de carbone ou d'un acide diaryldithiocarbamique dans lequel les groupes aryle contiennent 6 à 10 atomes de carbone ;
c) au moins 0,25 partie en poids phr d'un polyalkylèneglycol ; et
d) au moins 0,1 partie en poids phr d'au moins une hydrotalcite finement divisée qui est une matière du type hydroxyde-carbonate métallique basique dans laquelle le métal comprend plus d'un des éléments consistant en magnésium, zinc et aluminium.

2. Composition suivant la revendication 1, dans laquelle l'oxyde de zinc est présent en une teneur d'au moins 0,2 partie en poids phr.

3. Composition suivant la revendication 2, dans laquelle ladite hydrotalcite est représentée par la formule Mg₄Al₂(OH)₁₂CO₃•XH₂O, dans laquelle X a une valeur de 0 à 3.

4. Composition suivant la revendication 3, dans laquelle X est égal à 0.

5. Composition suivant la revendication 1, contenant en outre au moins 0,25 partie en poids phr d'acide stéarique ou de stéarate de zinc.

6. Composition suivant la revendication 2, contenant en outre au moins 0,25 partie en poids phr d'acide stéarique.

7. Composition suivant la revendication 3, dans laquelle ledit sel d'acide dithiocarbamique est le diéthyldithiocarbamate de zinc.

8. Composition suivant la revendication 7, dans laquelle ledit glycol est le triéthylèneglycol.

9. Composition suivant la revendication 1, dans laquelle ledit élastomère halogéné comprend un inter-polymère bromé d'isobutylène et de para-méthylstyrène.

10. Composition suivant la revendication 9, contenant en outre 10 à 70 parties en poids phr d'une charge.

11. Composition suivant la revendication 10, dans laquelle ladite charge consiste en un noir de carbone de qualité pour renforcement.

12. Composition suivant la revendication 9, contenant en outre 0,25 à 5 parties en poids phr d'un adjuvant de traitement consistant en polyéthylène de bas poids moléculaire.

13. Composition suivant la revendication 9, comprenant :
a) 0,3 jusqu'à 1,5 partie en poids phr d'oxyde de zinc
b) 0,25 jusqu'à 2,0 parties en poids phr du sel de zinc dudit acide dialkyldithiocarbamique ;
c) 0,25 jusqu'à 4,0 parties en poids phr dudit polyalkylèneglycol ; et
d) 0,1 jusqu'à 5 parties en poids phr de ladite hydrotalcite.

14. Composition suivant la revendication 13, contenant en outre 0,25 jusqu'à 5 parties en poids phr d'acide stéarique.

15. Composition suivant la revendication 13, dans laquelle ladite hydrotalcite répond à la formule Mg₄Al₂(OH)₁₂CO₃.

16. Composition suivant la revendication 15, dans laquelle ledit sel de zinc est le diéthyldithiocarbamate de zinc.

17. Composition suivant la revendication 16, dans laquelle ledit polyalkylèneglycol est le triéthylèneglycol.

18. Composition suivant la revendication 16, dans laquelle ledit polyalkylèneglycol est le polyéthylène-glycol.

19. Procédé pour la préparation d'une composition vulcanisée, comprenant le chauffage de la composition suivant la revendication 1 à une température et pendant une période de temps suffisantes pour le durcissement de ladite composition.

20. Procédé pour la préparation d'une composition vulcanisée, comprenant le chauffage de la composition suivant la revendication 13 à une température et pendant une période de temps suffisantes pour le durcissement de ladite composition.

21. Article façonné vulcanisé pouvant être obtenu par le procédé suivant la revendication 19 ou 20, ledit article ayant une déformation sous pression, de la manière déterminée en utilisant la pratique classique d'essai de laboratoire ASTM (ASTM D395-89), après 96 heures à 175°C, inférieure à 50 %.

22. Article suivant la revendication 21, ayant une déformation sous pression, de la manière déterminée en utilisant une pratique classique d'essai de laboratoire ASTM, après 96 heures à 175°C, inférieure à 40 %.
